# EUROPEAN PATENT APPLICATION

(11) **EP 3 332 653 A1**
(43) Date of publication of application: **13.06.2018**
(21) Application number: 16203092.8
(22) Date of filing: 09.12.2016
(51) Int. Cl.: A23L 3/22, A23L 3/36, A23C 3/033, A23L 2/46, F28D 7/00, F28F 9/24, F28D 21/00

(54) **TUBULAR HEAT EXCHANGER**

(71) Applicant: Tetra Laval Holdings & Finance S.A., 1009 Pully (CH)
(72) Inventor: INNINGS, Fredrik, 24745 TORNA HÄLLESTAD (SE)
(74) Representative: Tetra Pak - Patent Attorneys SE

(57) **Abstract**

The invention relates to a heat exchanger (22, 32, 42, 52) for heating or cooling a liquid food product. The heat exchanger (22, 32, 42, 52) comprises an inlet (23) for receiving a flow of liquid food product, and a distribution chamber (24) connected to the inlet (23) and to a tube (25) of the tubular heat exchanger for transferring heat to or from the liquid food product being supplied through said tube (25). The distribution chamber (24) is provided with a turbulence creating unit (28) for creating turbulence in front of the tubes (25), thereby reducing the risk of parts of the liquid food product of becoming stuck at or near the tube (25).

## Description

### Technical field

The present invention relates to a tubular heat exchanger, and in particular to a tubular heat exchanger for heating and/or cooling a liquid food product.

### Background art

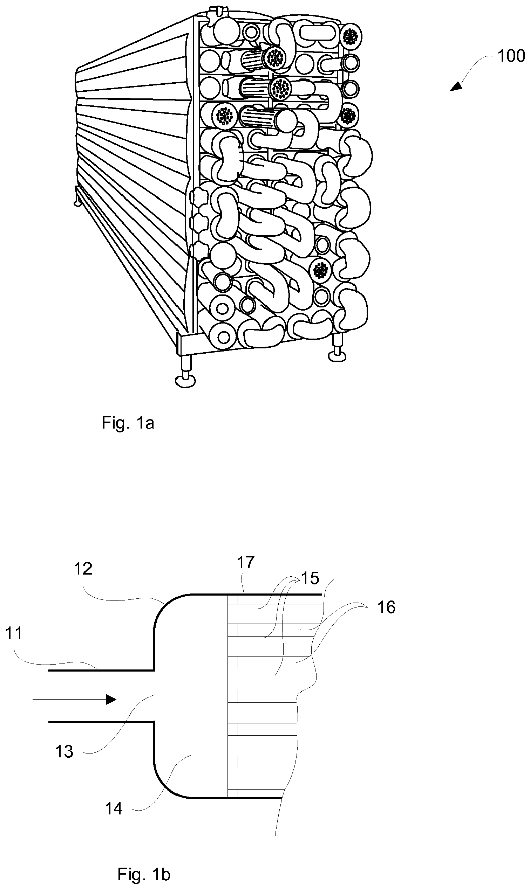

Tubular heat exchangers are in some cases used for pasteurisation and Ultra High Temperature (UHT) treatment of liquid food products. A conventional tubular heat exchanger 100, as shown in Fig. 1a, unlike plate heat exchangers, has no contact points in the product channel and can thus handle products with particles up to a certain size, being limited by the diameter of the tube. The tubular heat exchanger can also run longer between cleanings than the plate heat exchanger in UHT treatment.

Compared to a plate heat exchanger, a higher flow velocity is needed to create efficient heat transfer in a tubular heat exchanger. One type of tubular heat exchanger is the multi-tube.

Fig. 1b shows a cross-sectional side view of a main liquid food product supply line 11 being connected to a multi-tube type tubular heat exchanger 12 of the prior art. The heat exchanger 12 operates on the classic shell and tube principle, with the product flowing through a group of parallel tubes 15 and the heating medium or cooling medium flowing in a flow path 16 between and around the tubes 15. Turbulence for efficient heat transfer is created by helical corrugations on the tubes 15 and a shell 17 of the heat exchanger 12.

A multi-tube type tubular heat exchanger, such as the one shown in Fig. 1b, is connected with one inlet 13 thereof to the upstream product supply line 11. The inlet normally leads to a distribution chamber 14 to which the multi-tubes are individually connected. An outlet (not shown in Fig. 1 b) at the other end of the tubular heat exchanger is connected to the downstream product supply line. The outlet including the arrangement of the tubes and a distribution chamber (collection chamber) at the outlet are typically mirror-images of the chamber 14 and tubes 15 at the inlet 13.

The transition from a single product supply line to multiple tubes of the tubular heat exchanger affect the flow and pressure of the liquid food product. For example, liquid food product flowing from a first tube with a first cross sectional area to another tube with a cross-section area being smaller than that of the first cross-section area, would experience an increase in velocity and reduction in pressure. Conversely, a smaller to larger tube cross sectional area transition would imply a decrease in velocity and an increase in pressure. It is important that the entire incoming liquid food product is safely transferred into the multi-tubes. Moreover, it is also important to allow as efficient heat exchanging as possible. Hence, it would be advantageous to provide an improved tubular heat exchanger in this regard.

### Summary of the invention

It is an object of the present invention to mitigate, alleviate or eliminate one or more of the above-identified deficiencies in the art. In particular, it is an object to increase the heat transfer efficiency of a tubular heat exchanger.

According to a first aspect, these and other objects are achieved in full, or at least in part, by a tubular heat exchanger for heating and/or cooling a liquid food product. The heat exchanger comprises an inlet for receiving a flow of liquid food product from a main supply line, a distribution chamber being connected to the inlet and to a number of tubes for transferring heat to or from the liquid food product being supplied through said tubes. The distribution chamber is provided with at least one turbulence creating unit for creating turbulence in front of the tubes, thereby reducing the risk of parts of the liquid food product of becoming stuck at or near the tubes. Alternatively, the turbulence creating unit creates eddies (eddy currents) in front of the tubes. In this context, an eddie is a current running back, or in an opposite direction to a main current, where the main current goes from the inlet and towards the tubes.

With such a construction of the heat exchanger the risk of liquid food product content, such as fibers, getting stuck at the inlets will be eliminated. Furthermore, the heat transfer in the multi-tube type tubular heat exchanger will be improved. Such a multi-tube type tubular heat exchanger with higher heat transfer capabilities would both save energy and allow for improved control over the production process for the liquid food products.

In another preferred embodiment, the distribution chamber is connected to the inlet and to a single tube of the tubular heat exchanger for transferring heat to or from the liquid food product being supplied through said tube.

The at least one turbulence creating unit may have a cylindrical shape, a drop shape or extend in a radial direction of the distribution chamber across each tube of the tubular heat exchanger.

According to other embodiments, the turbulence creating unit may have a triangular shape or extend in a radial direction of the distribution chamber between at least two tubes of the tubular heat exchanger.

According to a second aspect of the invention, the objects are achieved in full, or at least in part, by a method for improving the heat transfer in a multi-tube type heat exchanging a liquid food product in a tubular heat exchanger. The method comprises the steps of supplying a liquid food product to an inlet of the tubular heat exchanger, receiving the liquid food product from the inlet into a distribution chamber of the tubular heat exchanger, creating turbulence in the distribution chamber by means of a turbulence creating unit, and supplying a flow of liquid food product including the created eddies into the tubes.

Effects and features of this second aspect of the present invention are analogous to those described above in connection with the first aspect of the inventive concept. Embodiments mentioned in relation to the first aspect of the present invention are compatible with the second aspect of the invention. Thus, features that may be implemented for the tubular heat exchanger may also be implemented for the method, and vice versa.

### Brief description of the drawings

The above objects, as well as additional objects, features and advantages of the present invention, will be more fully appreciated by reference to the following illustrative and non-limiting detailed description of preferred embodiments of the present invention, when taken in conjunction with the accompanying drawings, wherein:
Fig. 1 a illustrates a known tubular heat exchanger unit;
Fig. 1b illustrates a partial side view of a tubular heat exchanger of the prior art;
Fig. 2a illustrates a partial side view of a tubular heat exchanger according to an embodiment of the invention;
Fig. 2b illustrates a cross sectional view of a distribution area facing tubes of the tubular heat exchanger of Fig. 2a;
Fig. 3a illustrates a partial side view of a tubular heat exchanger according to another embodiment of the invention;
Fig. 3b illustrates a cross sectional view of a distribution area facing tubes of the tubular heat exchanger of Fig. 3a;
Fig. 4a illustrates a partial side view of a tubular heat exchanger according to a further embodiment of the invention;
Fig. 4b illustrates a cross sectional view of a distribution area facing tubes of the tubular heat exchanger of Fig. 4a;
Fig. 5a illustrates a partial side view of a tubular heat exchanger according to still another embodiment of the invention; and
Fig. 5b illustrates a cross sectional view of a distribution area facing tubes of the tubular heat exchanger of Fig. 5a;

### Detailed description of preferred embodiments of the invention

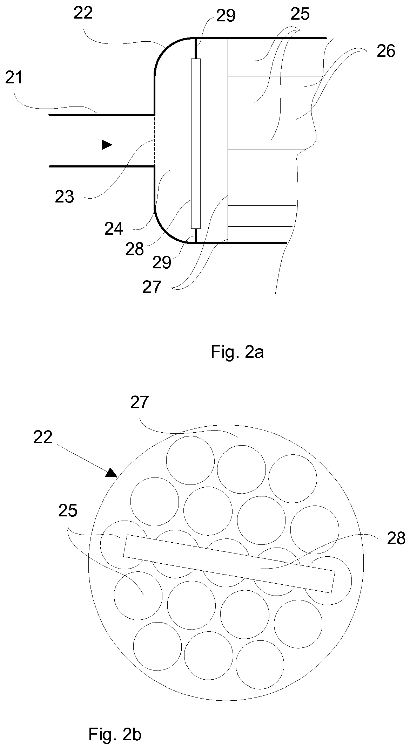

In an embodiment, according to Fig. 2a, a tubular heat exchanger 22 of multi-tube type is provided. The tubular heat exchanger 22 is arranged to be connected to a main liquid food product supply line 21 via an inlet 23. The inlet 23 leads to a distribution chamber 24 to which a number of tubes 25, i.e. multi-tubes, are connected, e.g. via a tube frame or sheet 27 securing the tubes 25 at a fix distance from one another and in a certain cross sectional multi-tube pattern. A heating media or a cooling flows in a flow path 26 between the tubes 25.

The tube frame 27 may act as to form a seal between the distribution chamber and the heating/cooling media, thereby preventing any contamination of the liquid food product.

The distribution chamber 24 is provided with a turbulence creating unit 28. The turbulence creating unit induces turbulent flow which produces eddies which improves the flow around the individual tube 25 inlets. Experiments have shown that the created eddies have been shown to remain for a considerably distance into the tubes 25. The turbulence creating unit 28 is attached to the interior of the cover 22 or to the tube frame 27. This may be accomplished by e.g. bars 29 that at a respective end are welded to the cover 22 or to the frame 27, and at opposite ends to the turbulence creating unit 28. Turbulence creating units of any embodiments of the tubular heat exchangers described herein may the attached in a similar manner, or may be attached in another suitable manner that holds the turbulence creating unit 28 in place.

Depending on the shape and position of the turbulence creating unit 28, the induced eddies drastically reduce or completely removes the risk of parts of the liquid food product to stuck between the inlets of tube 25. The most suitable shape and position of the turbulence creating unit 28 may be empirically determined, or may be determined by employing conventional calculation techniques for computer fluid dynamics (CFD). The turbulence creating units described herein are typically made of the same material as the tubes 25.

Fig. 2b shows a cross section of the distribution chamber 24 facing the tube frame 27 and the tubes 25. Here, the turbulence creating unit 28 is arranged across at least some of the tubes 25.

In an embodiment the turbulence creating unit 28 is shaped as a cylinder being indicated in Figs 2a and 2b. The cylinder is mounted in front of the tubes 25 in the distribution chamber 24. Preferably, the cylinder is placed upstream of the tubes 25, at a distance of between 10 and 30 cm.

By using a cylinder it is possible to create eddies that will help the transfer of fibres in a lateral direction in order to avoid fastening between the inlets of the tubes 25.

In an embodiment, the cylinder covers the all of the tubes in a row of the tubes, as shown in Fig. 2b. This particular configuration has shown to increase the heat transfer.

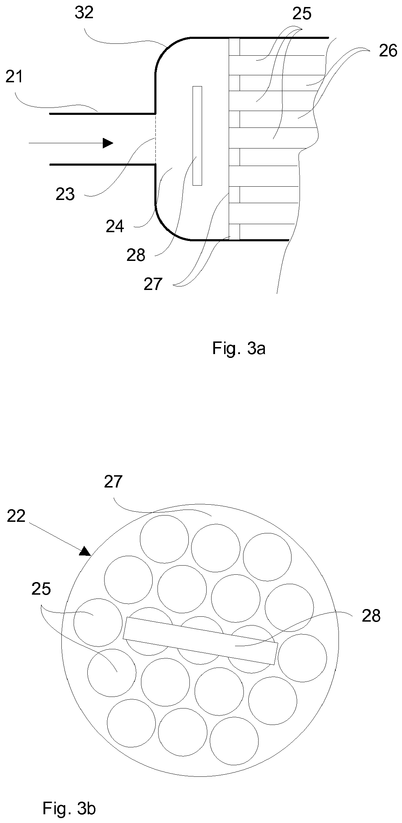

Figs 3a and 3b show a tubular heat exchanger 32 according to another embodiment, in which the turbulence creating unit 28 is arranged between two outermost tubes of the tubes 25 as shown in Fig. 3b. Here, the turbulence creating unit 28 is formed as a cylinder. This particular configuration has shown to induce sufficient eddies to prevent components of the liquid food products, e.g. fibres, from getting stuck at or between the tube 25 inlets.

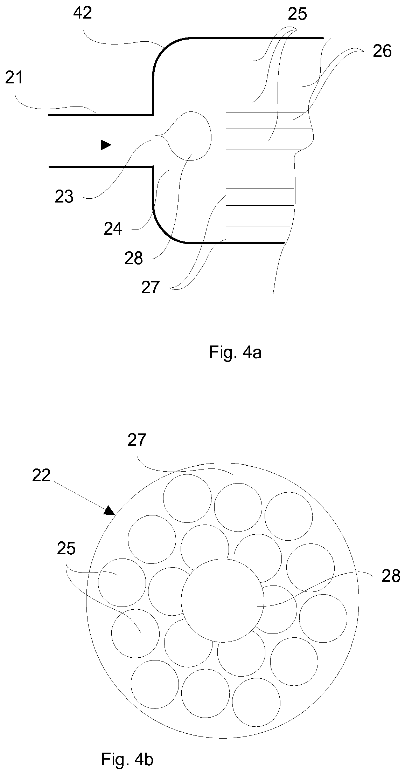

Figs 4a and 4b shows a tubular heat exchanger 42 according to another embodiment, in which the turbulence creating unit 28 is arranged between all outermost tubes of the tubes 25 shown in Fig. 4b. Here, the turbulence creating unit 28 is shaped like a drop. Fig. 4a show that the thinnest portion of the drop 28 faces the inlet 23 of the tubular heat exchanger and its round belly shaped bottom faces the inlets of the tubes 25. The drop shape configuration of the turbulence creating unit 28 has been shown to be very efficient in creating eddies.

Although the embodiments above have been directed to certain configurations of the turbulence creating unit 28, it should be appreciated that other shapes that creates eddies than those explicitly mentioned in the embodiments above are equally possible to use in order to allow for increased heat transfer. For example, according to an embodiment a triangular or pyramid shaped turbulence creating unit 28 could be used, e.g. with a tip facing the inlet 23 and with its base facing the inlets of the tubes 25.

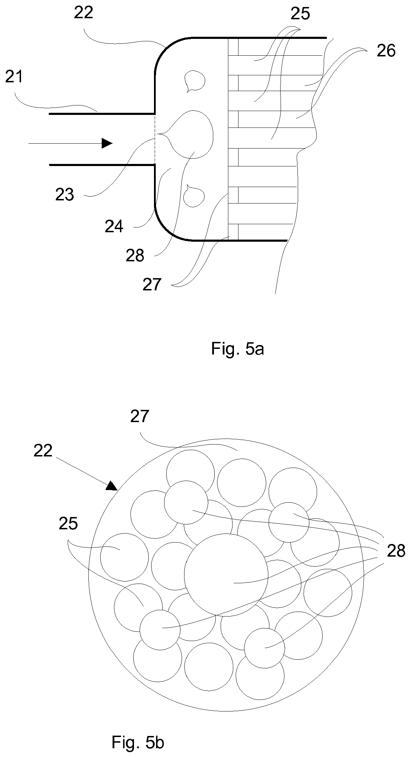

Furthermore, according to one embodiment more than one turbulence creating unit 28 could be provided in the distribution chamber 24. Figs 5a and 5b shows such an embodiment in which one relatively larger drop sized turbulence creating unit 28 is accompanied with four relatively smaller drop shaped turbulence creating units 28.

When more than one turbulence creating unit 28 is arranged in the distribution chamber 24, the size and/or shape between the respective turbulence creating units may differ in order to optimise the creation of eddies for all tubes 25 of the multi-tube type tubular heat exchanger. Hence one or more cylindrical turbulence creating units 28 could be arranged together with one or more drop shaped turbulence creating units 28 for providing the optimal eddy generation for the specific application.

For all embodiments one side (the inlet side) of the tubular heat exchanger is illustrated. The other side (outlet side) is typically a mirror-image of the inlet side. However, no turbulence creating unit is required at the outlet side.

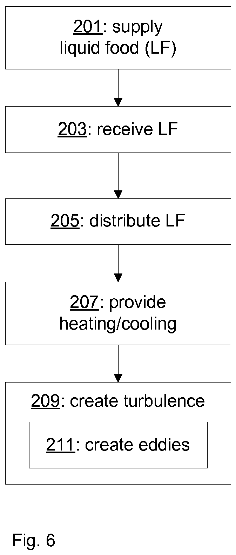

With reference to Fig. 6, a method for operating a tubular heat exchanger as described above is illustrated. The method comprises supplying 201 a liquid food product to the inlet 23 of the tubular heat exchanger, receiving 203 the supplied liquid food product, in the distribution chamber 24, distributing 205 the liquid food product to the one or more tubes 25 connected to the distribution chamber 24, and providing 207 a heating or cooling media into the flow path 26 surrounding the tube(s), for heating or cooling the liquid food product that is distributed to the tube 25. The method comprises the step of creating turbulence 209 in the liquid food product, in the distribution chamber 24 and in front of the tube 25, for reducing the risk of parts of the liquid food product becoming stuck at or near the tube 25. In detail, the creating of turbulence 209 may comprises creating eddies 211 in the liquid food product, in the distribution chamber 24 and in front of the tube.

Although, the embodiments above have been described for a multi-tube type tubular heat exchanger, it is within the scope of the invention to use a turbulence creating unit 28 in the vicinity of the inlet of a mono-tube type tubular heat exchanger for creating eddies to even further improve the heat transfer of said mono-tube type tubular heat exchanger.

Further, the invention has mainly been described with reference to a few embodiments. However, as is readily understood by a person skilled in the art, other embodiments than the ones disclosed above are equally possible within the scope of the invention, as defined by the appended claims.

## Claims

1. A tubular heat exchanger arranged to heat or cool a liquid food product, comprising
an inlet (23) for receiving a flow of liquid food product from a main supply line (21), and
a distribution chamber (24) connected to the inlet (23) for receiving the liquid food product, and
a tube (25) connected to the distribution chamber (24) for receiving the liquid food product, the tube being surrounded by a flow path (26) for a heating media or a cooling media, for heating or cooling the liquid food product that is received by the tube (25), **characterized by**
a turbulence creating unit (28) that is arranged in the distribution chamber (24), for creating turbulence in front of the tube (25) to thereby reduce the risk of parts of the liquid food product of becoming stuck at or near the tube (25).

2. A tubular heat exchanger according to claim 1, wherein
the tube (25) is the only tube that is connected to the distribution chamber (24) for receiving the liquid food product.

3. A tubular heat exchanger according to claim 1, comprising
a number of tubes (25) that are connected to the distribution chamber (24) for receiving the liquid food product.

4. The tubular heat exchanger according to any one of claims 1 to 3, wherein
the turbulence creating unit (28) has a cylindrical shape.

5. The tubular heat exchanger according to any one of claims 1 to 4, wherein
the turbulence creating unit (28) has a drop shape.

6. The tubular heat exchanger according to any one of claims 1 to 5, wherein
the turbulence creating unit (28) has a is triangular shape.

7. The tubular heat exchanger according to any one of claims 1 to 6, wherein
the turbulence creating unit (28) extends in a radial direction of the distribution chamber, across each tube (25) of the tubular heat exchanger.

8. The tubular heat exchanger according to claim 3, wherein
the turbulence creating unit (28) extends in a radial direction of the distribution chamber between at least two tubes (25) of the tubular heat exchanger.

9. The tubular heat exchanger according to any one of claims 1 to 8, wherein the turbulence creating unit (28) is arranged in the distribution chamber (24) for creating eddies in front of the tube (25).

10. A method for operating a tubular heat exchanger arranged to heat or cool a liquid food product, comprising
supplying (201) a liquid food product to an inlet (23) of the tubular heat exchanger,
receiving (203) the supplied liquid food product, in a distribution chamber (24) connected to the inlet (23)
distributing (205) the liquid food product to a tube (25) connected to the distribution chamber (24), and
providing (207) a heating or cooling media into a flow path (26) surrounding the tube (25), for heating or cooling the liquid food product that is distributed to the tube (25), **characterized by**
creating turbulence (209) in the liquid food product, in the distribution chamber (24) and in front of the tube (25), for reducing the risk of parts of the liquid food product becoming stuck at or near the tube (25).

11. A method for according to claim 10, wherein the creating of turbulence (209) comprises
creating eddies (211) in the liquid food product, in the distribution chamber (24) and in front of the tube (25), for reducing the risk of parts of the liquid food product becoming stuck at or near the tube (25).
